Europäisches Patentamt

(19) European Patent Office

Office européen des brevets

(11) Numéro de publication : **0 310 543 B1**

## (12) FASCICULE DE BREVET EUROPEEN

(45) Date de publication du fascicule du brevet :
**16.10.91 Bulletin 91/42**

(51) Int. Cl.⁵ : **G01D 5/12**

(21) Numéro de dépôt : **88810466.8**

(22) Date de dépôt : **07.07.88**

(54) **Utilisation d'un procédé de transformation d'un matériau magnétique en un matériau non magnétique ou inversement pour une mesure incrémentale sans contact du déplacement et/ou de la position d'une pièce mobile.**

(30) Priorité : **11.08.87 CH 3089/87**

(43) Date de publication de la demande :
**05.04.89 Bulletin 89/14**

(45) Mention de la délivrance du brevet :
**16.10.91 Bulletin 91/42**

(84) Etats contractants désignés :
**AT CH DE FR GB LI**

(56) Documents cités :
**EP-A- 0 027 308
FR-A- 2 030 713
IBM TECHNICAL DISCLOSURE BULLETIN,
vol. 6, no. 2, juillet 1963, page 14, New York,
US; F.H. APPEL: "Treatment of recording
material"**

(73) Titulaire : **VIBRO-METER SA
Route de Moncor 4
CH-1700 Fribourg (CH)**

(72) Inventeur : **Lustenberger, Martin
Rte des Dailles 11
CH-1752 Villars sur Glâne (CH)**

(74) Mandataire : **Steiner, Martin et al
c/o AMMANN PATENTANWÄLTE AG BERN
Schwarztorstrasse 31
CH-3001 Bern (CH)**

## Description

La présente invention concerne une utilisation d'un procédé de transformation d'un matériau magnétique en un matériau non magnétique ou inversément, par échauffement local pour produire des surfaces magnétisées localisées à la surface d'une pièce mobile. Un procédé tel que celui mentionné ci-dessus est décrit dans la publication "IBM Technical Disclosure Bulletin, vol. 6, no. 2, juillet 1963, page 14 ; F.H. Appel : "Treatment of recording material". Ce procédé concerne la transformation d'un matériau magnétique en un matériau non magnétique ou inversément par utilisation d'un rayon laser afin de produire des surfaces magnétisées localisées par transformation par échauffement d'un métal magnéto-thermiquement sensible et à son utilisation pour produire des traces d'enregistrement sur un support magnétique tel que les traces discrètes d'oxyde magnétique d'un enregistrement sur disque magnétique.

Le document EP 0027308 décrit un système d'échelle magnétique pour la mesure d'un déplacement linéaire ou angulaire de parties mobiles relativent l'une à l'autre. Toutefois, comme dans le cas précédant, le motif doit être formé sur un support magnétique, par exemple une bande magnétique dans le système ci-dessus. Si le motif n'est pas formé sur un support en fer doux ou en matériau magnétique, il devient nécessaire pour la mise en oeuvre du procédé, d'ajouter à la surface de la pièce mobile un support magnétique tel qu'une bande magnétique par exemple. Un tel support ne peut cependant être rajouté que s'il ne perturbe pas la fonction ou le fonctionnement de la pièce mobile, ceci n'étant par exemple pas le cas si la pièce mobile est une tige de piston hydraulique en acier magnétique usuel. En conséquence, le but de la présente invention est une utilisation d'un procédé de transformation d'un matériau magnétique en un matériau non magnétique ou inversément, pour permettre une mesure incrémentale et sans contact du déplacement et/ou de la position d'une pièce mobile mobile, ne nécessitant pas l'apport d'un support de motif magnétique à la surface de la pièce mobile. L'utilisation selon l'invention est décrite dans la revendication 1. L'utilisation d'un faisceau laser pour créer le motif magnétique permet de former celui-ci directement et sans support intermédiaire à la surface d'une pièce mobile en acier magnétique usuel. La lecture du motif est faite sans contact par une tête magnétique. Il est visible que la fonction ou le fonctionnement de la pièce mobile, p. ex. une tige de piston hydraulique ou similaire en acier magnétique usuel n'est pas perturbé par le motif formé à sa surface. L'invention permet donc de mesurer le déplacement de pièces mobiles en acier magnétique usuel sans l'apport à la surface de ces pièces d'un support intermédiaire contenant un motif magnétique, ce support empêchant ou perturbant la fonction de celles-ci.

L'invention va être décrite plus en détail ci-après à l'aide d'un dessin de principe.

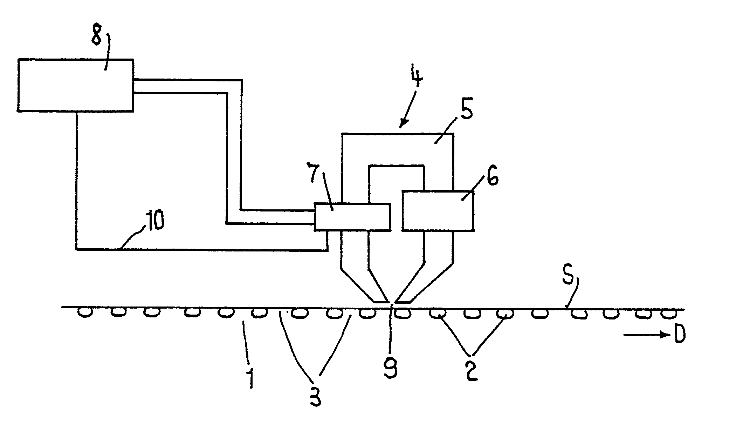

La figure montre une pièce mobile 1 en acier magnétique usuel à la surface S de laquelle se trouvent des zones 2, par exemple sous forme de points ou de traits perpendiculaires au plan de la figure et à la direction de déplacement D de la pièce 1, ces zones étant disposées sur la surface S selon une répartition déterminée, p. ex. régulière, et formant un motif magnétique avec les intervalles 3 qui les séparent. En effet, les zones 2 sont formées par l'application d'un faisceau laser produisant un échauffement local de la surface de la pièce 1. Cet échauffement a pour conséquence un changement de la structure cristalline de la pièce 1 en acier magnétique usuel et un changement correspondant des propriété magnétiques de ces zones. Le motif magnétique formé des zones 2 et des intervalles 3 comprend donc alternativement des régions 3 avec une certaine propriété magnétique et des zones 2 avec d'autres propriétés magnétiques. L'application du faisceau laser a pour conséquence p. ex. de transformer par échauffement local et refroidissement lent une structure métallique martensitique en une structure métallique ferritique, ces structures ayant des propriétés magnétiques différentes. Une autre possibilité, applicable sur une pièce magnétisée, consiste à provoquer par un faisceau laser un échauffement local de la surface de la pièce mobile 1 en dessus du point de Curie, ce qui désaimante la surface à l'endroit de l'impact du faisceau laser. Dans tous les cas, les propriétés magnétiques des zones 2 sont différentes de celles des intervalles 3 qui les séparent.

Le motif magnétique résultant, formé des zones 2 et des intervalles 3 peut être utilisé pour la mesure incrémentale du déplacement de la pièce mobile 1, ou de sa position. Dans ce but, on utilise une tête de lecture magnétique 4 formée d'un circuit magnétique 5 à deux branches délimitant un entrefer 9. L'une des branches supporte un aimant permanent 6 et l'autre un élément 7 sensible au champ magnétique, p. ex. un élément à effet Hall. Ce dernier est connecté à l'entrée d'un compteur réversible 8. Le fonctionnement est le suivant : L'entrefer 9 est disposé au voisinage immédiat de la surface S porteuse du motif magnétique. Le flux magnétique créé par l'aimant permanent dans le circuit magnétique est différent selon qu'il se referme entre les poles de l'entrefer par les zones 2 ou par les intervalles 3 du motif magnétique. Cette variation de l'intensité du champ magnétique est détectée par l'élément sensible 7 sous forme d'impulsions qui sont comptées en avant ou en arrière selon la direction du déplacement de la pièce mobile 1. Dans ce but, l'élément 7 comprend un circuit détectant la direction du déplacement et commandant par une connexion 10 le sens de comptage du compteur 8.

Ce qui précède montre que le dispositif est bien capable de mesurer de manière incrémentale et sans contact le déplacement d'une pièce mobile en acier magnétique usuel ou sa position par rapport à une origine, ce qui lui confère un domaine d'application plus étendu.

## Revendications

1. Utilisation d'un procédé de transformation d'un matériau magnétique en un matériau non magnétique ou inversément, par échauffement local pour produire des surfaces magnétisées localisées à la surface d'une pièce mobile, caractérisée en ce que la pièce mobile est en acier magnétique, que l'on utilise un faisceau laser pour produire ledit échauffement local afin de former directement à la surface de ladite pièce mobile un motif permettant une mesure incrémentale du déplacement et/ou de la position de la pièce mobile et que l'on fait la lecture du motif par une tête de lecture magnétique.

2. Utilisation selon la revendication 1, caractérisée en ce que ledit motif est formé par une série de zones, par exemple sous forme de points ou de traits, séparées par des intervalles, les zones et les intervalles ayant des propriétés magnétiques différentes.

3. Utilisation selon la revendication 1 ou 2, caractérisée en ce que l'on transforme par échauffement local une structure métallique martensitique de la pièce mobile en une structure ferritique par application du faiceau laser.

4. Utilisation selon l'une des revendications 1 à 3, caractérisée en ce que l'on démagnétise localement la pièce mobile aimantée par échauffement en dessus du point de Curie, par application du faisceau laser.

5. Utilisation selon l'une des revendications 1 à 4, pour une mesure incrémentale et sans contact du déplacement et/ou de la position d'une tige de piston hydraulique ou similaire.

## Patentansprüche

1. Anwendung eines Umwandlungsverfahrens eines magnetischen in ein nichtmagnetisches Material oder umgekehrt durch lokales Erhitzen zur Erzeugung von lokalen magnetisierten Stellen auf der Oberfläche eines beweglichen Teils, dadurch gekennzeichnet, dass das bewegliche Teil aus magnetischem Stahl besteht, dass ein Laserstrahl zur lokalen Erhitzung benutzt wird, um unmittelbar auf der Oberfläche dieses beweglichen Teils ein Muster zu bilden, welches eine Inkrementalmessung der Verschiebung und/oder der Lage des beweglichen Teils erlaubt, und dass die Abtastung dieses Musters mit einem magnetischen Lesekopf erfolgt.

2. Anwendung nach Anspruch 1, dadurch gekennzeichnet, dass das Muster aus einer Anzahl Zonen besteht, beispielsweise in Form von Punkten oder Strichen mit dazwischenliegenden Zwischenräumen, wobei die Zonen und die Zwischenräume jeweils unterschiedliche magnetische Eigenschaften aufweisen.

3. Anwendung nach Anspruch 1 oder 2, dadurch gekennzeichnet, dass durch lokales Erhitzen unter Anwendung des Laserstrahls eine martensitische Metallstruktur des beweglichen Teils in eine ferritische Struktur umgewandelt wird.

4. Anwendung nach einem der Ansprüche 1 bis 3, dadurch gekennzeichnet, dass das magnetisierte bewegliche Teil durch Erhitzen über den Curiepunkt unter Anwendung des Laserstrahls lokal entmagnetisiert wird.

5. Anwendung nach einem der Ansprüche 1 bis 4, zur kontaktlosen Inkrementalmessung der Verschiebung und/oder der Lage einer hydraulischen Kolbenstange oder dergleichen.

## Claims

1. Use of a method for transformation of a magnetic material into a non-magnetic material or vice versa, by local heating in order to produce magnetized surfaces which are located on the surface of a movable piece, characterized in that said movable piece is made of magnetic steel, that a laser beam is used to produce said local heating in order to form directly on the surface of said movable piece a pattern allowing an incremental measure of the displacement and/or of the position of said movable piece, and that said pattern is read by means of a magnetic reading head.

2. Use according to claim 1, characterized in that said pattern is formed by a series of zones, e.g. in the form of dots or lines, which are separated by spaces, said zones and said spaces having different magnetic properties.

3. Use according to claim 1 or 2, characterized in that a martensitic metal structure of said movable piece is transformed by local heating into a ferritic structure under application of said laser beam.

4. Use according to any one of claims 1 to 3, characterized in that said magnetized movable piece is locally demagnetized by heating above the Curie point under application of said laser beam.

5. Use according to any one of claims 1 to 4, for a contactless incremental measure of the displacement and/or of the position of a hydraulic piston rod or the like.